# EUROPÄISCHE PATENTSCHRIFT

(11) **EP 1 152 982 B1**
(45) Veröffentlichungstag und Bekanntmachung des Hinweises auf die Patenterteilung: **18.05.2005**
(21) Anmeldenummer: 99963385.2
(22) Anmeldetag: 03.12.1999
(51) Int. Cl.: C01F 7/00, H01M 10/39, C09K 5/06, C09K 5/00, B22D 11/10, C22B 21/06

(54) **VERFAHREN ZUR HERSTELLUNG VON SALZSCHMELZEN MIT EINEM EXTRUDER UND DEREN VERWENDUNG**
METHOD FOR PRODUCING MOLTEN SALTS WITH AN EXTRUDER AND USE OF THE MOLTEN SALTS
PROCEDE DE PRODUCTION DE SELS FONDUS PAR UNE EXTRUDEUSE ET SON UTILISATION

(30) Priorität: 15.12.1998 DE 19857788
(43) Veröffentlichungstag der Anmeldung: 14.11.2001
(73) Patentinhaber: BASF AKTIENGESELLSCHAFT, 67056 Ludwigshafen (DE)
(72) Erfinder: OHREM, Hans-Leonhard, D-64342 Jugenheim (DE); BRZEZINSKI, Susanne, D-64683 Einhausen (DE)
(86) Internationale Anmeldenummer: PCT/EP1999/009485
(87) Internationale Veröffentlichungsnummer: WO 2000/035809

(56) Entgegenhaltungen:
- FR-A- 2 168 912
- GB-A- 2 056 757
- US-A- 3 650 730
- US-A- 3 761 578
- US-A- 4 846 943
- CHEMICAL ABSTRACTS, vol. 94, no. 22, 1. Juni 1981 (1981-06-01) Columbus, Ohio, US; abstract no. 177988, MOSZYNSKI, J. R. ET AL: "Development of intermediate temperature thermal storage systems" XP002135635 & REPORT (1979), DOE/CS/35760-T1, 63 PP. AVAIL.: NTIS FROM: ENERGY RES. ABSTR. 1980, 5(21), ABSTR. NO. 33641,
- H.L. FRIEDMAN ET AL.: "Observations on the chlorogallates and related compounds" JOURNAL OF THE AMERICAN CHEMICAL SOCIETY, Bd. 72, 1950, Seiten 2236-2243, XP002135634 US in der Anmeldung erwähnt

## Beschreibung

Die Erfindung betrifft ein Verfahren zur Herstellung von Salzschmelzen und deren Mischungen mittels eines Extruders, in dem die Ausgangsmaterialien aufgeschmolzen, zur Reaktion gebracht werden und die Reaktionsprodukte anschließend über eine Säule oder Kolonne mit Alkalisalz geführt werden.

Extruder werden traditionell zum Schmelzen und Mixen von polymeren Materialien wie Kunststoffen eingesetzt. Die Extruder können auch als Reaktor für Polymerisationen genutzt werden. Die anionische Polymerisation in einem Extruder wird z.B. für Carpolactam zu Polyamid 6 beschrieben (B. VanBuskirk, M.K. Akkapeddi, Polym. Prepr., Vol.29, 557, (1988)). Der Vorteil der Verwendung eines Extruders gegenüber der eines Rührkessels für Polymerisationsreaktionen liegt in der einfacheren Verarbeitbarkeit hoch viskoser Stoffe. Auch das Erfordernis einer gründlichen Durchmischung aller an der Reaktion beteiligten Stoffe sowie ein guter Wärmeübergang können durch den Einsatz eines Extruders optimal gelöst werden (G. Menges et al, New Polym. Mater., Proc. Int. Semin., 129-148, (1987)). In EP 813904 werden mittels Extruder pharmazeutische Wirkstoffe hergestellt. Hierbei werden Säuregruppen tragende pharmazeutische Wirkstoffe mit einer Base in der Schmelze umgesetzt.

Schmelzen von Salzen wie z.B. NaAlCl₄ haben verschiedene Einsatzgebiete. Salzschmelzen können als Speichermedium in Wärmespeichern, als Wärmeübertragungsmittel, z.B. in Heizbädern, zum Abdecken und Reinigen geschmolzener Metalle, zur galvanotechnischen Beschichtung von hochschmelzenden Werkstoffen oder als Schmelzelektrolyte in Primärbatterien, wie in GB 2046506 beschrieben, eingesetzt werden. Eine weitere Einsatzmöglichkeit dieser Salze ist in wiederaufladbaren Natriumbatterien. Die Salze werden in Batterien eingesetzt, die Betriebstemperaturen zwischen 130°C und 200°C haben (K.M.

Abraham, D. M. Pasquariello, J. Electrochem. Soc., Vol. 137, 1189-1190, (1990)).

In DE 3419279 wird eine elektrochemische Zelle beschrieben, in der die Kathodenmatrix mit einem Natrium-Aluminiumhalogenid-Salzschmelzelektrolyt imprägniert ist.

Ein relativ neues Einsatzgebiet ist die "ZEBRA-Batterie". Diese Hochtemperatur-Zelle besteht aus einer Elektrode aus flüssigem Natrium, einem beta Aluminium Elektrolyten und einer Elektrode aus Übergangsmetallchlorid in NaAlCl₄-Schmelze (B. Cleaver, V.S. Sharivker, J. Electrochem. Soc., Vol. 142, 3409-3413, (1995)).

In DE 3718920 wird die Herstellung von Salzschmelzen über die Zugabe eines reinen Metalls und eines Alkalimetallhalogenids zur Schmelze beschrieben. Die Reaktionszelle wird oberhalb des Schmelzpunktes der Salzschmelze betrieben. Das Alkalimetallhalogenid ist in dem Ausführungsbeispiel NaCl, das schmelzflüssige Alkalimetall Natrium, und der Separator ist Beta-Aluminiumoxid. Aufgrund des Einsatzes von reinem Natrium müssen besondere Sicherheitsvorkehrungen, wie das Arbeiten unter Schutzgasatmosphäre, getroffen werden. Die Reaktionen müssen in separaten Zellen ablaufen, da eine Vergiftung des Separators durch das gebildete Nebenprodukt AlHal₃ verhindert werden muß.

Zur Herstellung der Alkalihalogenaluminate wird die Reaktion von entsprechenden Aluminiumhalogeniden und Alkalihalogeniden im geschlossenen Rohr beschrieben (Friedmann, Taube, J. Am. Chem. Soc., 72, 2236-2243, (1950)). Es wurde bei diesem Verfahren ein Druckanstieg auf bis zu 6-7 Atmosphären festgestellt, was zu Problemen führt (FR 2168912). Die Apparaturen müssen mit den entsprechenden Sicherheitsvorkehrungen ausgestattet werden.

Bisher bekannte Herstellverfahren für Salzschmelzen arbeiten sämtlich chargenweise. Eine Ansatzfahrweise besitzt gegenüber einem kontinuierlichen Herstellverfahren einige gravierende Nachteile. Bei einem Chargenwechsel muß die Apparatur geöffnet werden. Dabei kann das Produkt durch den Sauerstoff der Umgebungsluft, Wasser und Staub verunreinigt werden. Durch den Chargenwechsel kommt es zu Standzeiten der Anlage und damit zu einer verringerten Raum-Zeit-Ausbeute. Für ein effektives diskontinuierliches Verfahren muß mit großen Apparaturen gearbeitet werden. Der Einfahrprozeß benötigt entsprechend mehr Energie und Zeit. Es hat sich gezeigt, daß insbesondere beim Anfahren der Anlagen Verunreinigungen in den Prozeß eingeschleust werden. In FR 2168912 wird ein aufwendiges Reinigungsverfahren für Alkalihalogenaluminate dargestellt. Der 2-stufige Reinigungsprozeß setzt sich aus einer Sauerstoffbehandlung zum Abbau der organischen Verunreinigungen und einer Aluminiumbehandlung zur Fällung von Eisen und Schwermetallen zusammen. Die Aluminiumbehandlung muß unter Stickstoff- oder Argonatmosphäre durchgeführt werden.

Aufgabe der Erfindung ist es, ein kontinuierliches Verfahren zur Herstellung reiner Salzschmelzen zur Verfügung zu stellen, das die nachteiligen Umgebungseinflüsse ausschließt, den Energiebedarf minimiert und eine optimale Raum-Zeit-Ausbeute ermöglicht. Aufgabe ist es auch, große Mengen von Salzschmelzen in kürzester Zeit zur Verfügung zu stellen.

Die erfindungsgemäße Aufgabe wird gelöst durch ein Verfahren zur Herstellung von Salzschmelzen und deren Mischungen der allgemeinen Formel

MDHal₄ (I)

worin
- M: Li, Na, K, Rb, Cs
- D: Al, Ga, In, Tl
- Hal: F, Cl, Br, I
bedeuten, dadurch gekennzeichnet, daß die Ausgangsmaterialien, ein Metallhalogenid und ein Alkalihalogenid, in einem beheizbaren Extruder mit Zwangsförderung geschmolzen und zur Reaktion gebracht werden und die Reaktionsprodukte anschließend über eine Säule oder Kolonne mit Alkalisalz geführt werden.

Die Verfahrensprodukte sind für die Verwendung zur galvanotechnischen Beschichtung von hochschmelzenden Werkstoffen geeignet.

Überraschend wurde gefunden, daß die Edukte mittels Extruder verarbeitet werden können. Die befürchtete Verunreinigung des Produktes durch Abrasion konnte durch geeignete Werkstoffauswahl und Verweilzeit verhindert werden.

Es wurde gefunden, daß durch die Zwangsförderung des Extruders auf Pumpen in diesem Prozeß verzichtet werden kann, was die Störanfälligkeit des Verfahrens erheblich verringert.

Für das Verfahren können alle dem Fachmann geeignet erscheinenden Extruder verwendet werden. Besonders geeignet sind Einschneckenextruder, Mehrwellenextruder mit gleichsinnig und gegensinnig drehenden Schneckenmaschinen, Entgasungsextruder, Planetwalzen-Extruder, Kolben-Extruder und Scheiben-Extruder. Für die Verarbeitung von Salzen in Extrudern stellt die Härte der eingesetzten Stoffe und deren chemischen Eigenschaften besondere Probleme dar, die bisher der Durchführung entgegenstanden. In der Regel besteht der Extruder aus Stahl. Dieses Material würde bei der Verarbeitung von Salzen durch Korrosion und Abrasion stark geschädigt werden.

Es wurde gefunden, daß in Extrudern, deren wesentlichen Bauteile aus Nickellegierungen hergestellt sind, die Korrosion stark vermindert werden kann. Es wurde weiterhin gefunden, daß die mit den Salzen bzw. deren Schmelzen in Berührung kommenden Metallteile des Extruders gegen korrosive und abrasive Schädigungen geschützt werden können, durch Oberflächenbeschichtungen mit dem Fachmann bekannten Materialien wie PTFE/PFA, Emaille oder keramische Materialien. Zur Verminderung der Abrasion kann eine zusätzliche Lagerung am Kopf der Schnecke eingebaut werden.

Überraschend wurde gefunden, daß durch den Einbau von Schneckenelementen mit umgekehrter Strömungsrichtung trotz sehr kurzer mittlerer Verweilzeit des Materials in dem Extruder von wenigen Sekunden ein vollständig geschmolzenes und homogenes Produkt erhalten werden kann.

Die Umsetzung im Extruder kann in Gegenwart von Luftsauerstoff oder gegebenenfalls unter Schutzgasatmosphäre (z.B. Stickstoff, CO₂, Edelgase) bei vermindertem Druck, Normaldruck aber auch bei Überdruck bei Temperaturen von 50°C bis 800°C (bei Normaldruck) durchgeführt werden. Beim Arbeiten unter Überdruck oder vermindertem Druck verschieben sich die Schmelzpunkte der Salze entsprechend und die Heizstufen des Extruders werden entsprechend angepaßt.

Die Verarbeitung sollte unterhalb der Sublimationstemperatur der Ausgangsstoffe durchgeführt werden. Bevorzugt wird bei höheren Temperaturen gearbeitet, da die Löslichkeit der Salze unter solchen Bedingungen wesentlich besser ist.

Während der Verarbeitung der Salze im Extruder kann durch eine gezielte Temperaturwahl der Heizstufen eine optimale Temperaturführung während des Prozesses eingestellt werden.

Zur Durchführung des Verfahrens kann als Aluminiumhalogenid ein Fluorid, Chlorid, Bromid oder lodid und deren Mischungen eingesetzt werden. Geeignete Alkalisalze sind Lithium-, Natrium-, Kalium-, Rubidium- oder Cesium fluorid, -chlorid, -bromid oder -jodid und deren Mischungen.

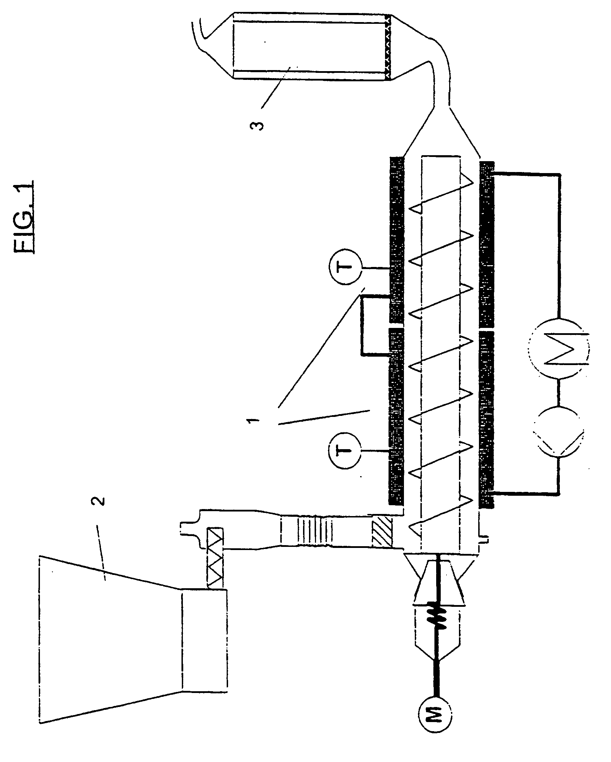

Nachfolgend wird ein allgemeines Beispiel der Erfindung näher erläutert, das in der Zeichnung dargestellt ist. Es zeigt Fig. 1 einen beheizbaren Extruder 1 mit Feststoffdosierer 2 und nachgeschalteter Kolonne oder Säule 3.

Zur Herstellung von Salzen, entsprechend der Formel (I), und deren Mischungen, können die Edukte dem Extruder separat über Feststoffdosierer 2 zugeführt werden. Die Rohstoffe können auch im gleichen Verhältnis, vorgemischt, über einen Dosierer zugeführt werden. Die Befüllung kann auch unter Inertgas durchgeführt werden. Ein Extruder mit Zwangsförderung schiebt die Salzschüttung im Schneckenkanal mit Drehzahlen zwischen 1 min⁻¹ und 75 min⁻¹ vorwärts. Die Schneckengeometrie kann ein l/d Verhältnis zwischen 3 und 25 aufweisen. In den Heizzonen des Mantels 1 können die Schmelztemperaturen für die verschiedenen Ausgangsstoffe und Endprodukte eingestellt werden. Im letzten Viertel können Schneckenelemente verwendet werden, die eine Rückdurchmischung verursachen. Damit wird die Verweilzeit in dieser Zone erhöht und noch nicht geschmolzene Salze werden mit flüssiger Schmelze vermischt.

Die durch das Verfahren erhaltene dünnflüssige Schmelze wird einer Kolonne oder Säule 3 zugeführt, die mit dem entsprechenden Alkalisalz bestückt ist. Die Schmelze wird über das Alkalisalz geleitet, um Restmengen von nicht abreagiertem Metallhalogenid umzusetzen.

Der durch den Extruder aufgebaute Förderdruck kann für den Transport der Schmelze zur und durch die Säule bzw. Kolonne genutzt werden.

Das im folgenden gegebene Beispiel wird zur besseren Veranschaulichung der vorliegenden Erfindung gegeben, ist jedoch nicht dazu geeignet, die Erfindung auf die hierin offenbarten Merkmale zu beschränken.

### Beispiele

### Beispiel 1:

### Darstellung von NaAlCl₄

Zur Herstellung von 1 kg/h NaAlCl₄ wird einem Extruder über eine Feststoffdosierung 373,8 g/h NaCl und über eine weitere Feststoffdosierung 626,2 g/h AlCl₃ zugeführt. Eine zweiwellige Extruderschnecke mit Zwangsförderung schiebt diese Salzschüttung im Schneckenkanal mit einer Drehzahl von 25 min⁻¹ vorwärts. Die verschiedenen Heizzonen des Mantels können so angepaßt werden, daß das Salz im Verlauf der Strecke von der Einzugsöffnung bis zur Ausstoßzone auf die Schmelztemperatur des Salzes gebracht wird. Bei der Herstellung von NaAlCl₄ wird eine Temperatur von 182°C im Zulauf eingestellt. Im letzten Viertel befinden sich Schneckenelemente, die eine umgekehrte Förderrichtung haben. Damit wird in dieser Zone die Verweilzeit des Gemisches erhöht. Es werden nicht geschmolzene Salze mit flüssiger Schmelze vermischt, um einen besseren Wärmeübergang zu ermöglichen.

Die entstandene dünnflüssige Schmelze wird über eine Rohrleitung einer Säule zugeführt, die eine Schüttung aus Kochsalzgranulat enthält. In der Säule werden Reste von nicht abreagiertem AlCl₃ zu NaAlCl₄ umgesetzt. Der Förderdruck des Extruders reicht aus, um die Schmelze ohne zusätzliche Pumpvorrichtung zur und durch die Säule zu transportieren.

## Patentansprüche

1. Ein Verfahren zur Herstellung von Salzschmelzen und deren Mischungen der allgemeinen Formel
MDHal₄ (I)
worin
M Li, Na, K, Rb, Cs
D Al, Ga, In, Tl
Hal F, Cl, Br, I
bedeuten, **dadurch gekennzeichnet, daß** die Ausgangsmaterialien, ein Metallhalogenid und ein Alkalisalz, über einen Feststoffdosierer (2) zugegeben, in einem beheizbaren Extruder (1) mit Zwangsförderung geschmolzen und zur Reaktion gebracht werden und die Reaktionsprodukte anschließend über eine Säule oder Kolonne (3) mit Alkalisalz geführt werden.

2. Verfahren gemäß Anspruch 1, **dadurch gekennzeichnet, daß** die Ausgangsmaterialien in einem beheizbaren Extruder (1) mit Zwangsförderung bei einer Temperatur zwischen 50°C und 800°C geschmolzen und zur Reaktion gebracht werden.

3. Verfahren gemäß der Ansprüche 1 und 2, **dadurch gekennzeichnet, daß** die Reaktion unter vermindertem Druck, Normaldruck oder Überdruck in Gegenwart von Luftsauerstoff oder gegebenenfalls unter Schutzgasatmosphäre durchgeführt wird.

4. Verfahren gemäß Anspruch 1, **dadurch gekennzeichnet, daß** die Salzschüttung in einem Extruder, dessen mit den Salzen bzw. deren Schmelzen in Berührung kommenden Teile aus einer Ni-Legierung oder mit PTFE/PFA-, Email- oder keramischen Materialien beschichteten Metallen bestehen und einen Schneckenkanal mit einem l/d Verhältnis zwischen 3 und 25 besitzt, mit Drehzahlen zwischen 1 min⁻¹ und 75 min⁻¹ verarbeitet wird.

5. Verwendung von gemäß Anspruch 1 hergestellten Salzen der allgemeinen Formel (I) zur galvanotechnischen Beschichtung von hochschmelzenden Werkstoffen.

## Claims

1. Process for the preparation of salt melts, and mixtures thereof, of the general formula
MDHal₄ (I)
in which
M is Li, Na, K, Rb or Cs,
D is Al, Ga, In or Tl, and
Hal is F, Cl, Br or I,
**characterized in that** the starting materials, a metal halide and an alkali metal salt, are fed via a solids metering device and melted and brought to reaction in a heatable extruder (1) with forced conveying, and the reaction products are subsequently passed through a tower or column (3) containing alkali metal salt.

2. Process according to Claim 1, **characterized in that** the starting materials are melted and brought to reaction in a heatable extruder (1) with forced conveying at a temperature between 50°C and 800°C.

3. Process according to Claims 1 and 2, **characterized in that** the reaction is carried out under reduced pressure, atmospheric pressure or superatmospheric pressure in the presence of atmospheric oxygen or, if desired, under a protective-gas atmosphere.

4. Process according to Claim 1, **characterized in that** the salt bed is processed in an extruder whose parts which come into contact with the salts or melts thereof are made of an Ni alloy or of metals coated with PTFE/PFA, enamel or ceramic materials and which has a screw channel having an l/d ratio of between 3 and 25, at screw speeds of between 1 rpm and 75 rpm.

5. Use of salts of the general formula (I) prepared according to Claim 1 for electrocoating of high-melting materials.

## Revendications

1. Procédé de préparation de sels fondus et de leurs mélanges répondant à la formule générale :
MDHal₄ (I)
dans laquelle
M représente Li, Na, K, Rb, Cs,
D représente Al, Ga, In, Ti,
Hal représente F, Cl, Br, I,
**caractérisé en ce que** les matières de départ, un halogénure de métal et un sel de métal alcalin, sont ajoutées par l'intermédiaire d'un doseur de matière solide (2), fondues et amenées à réagir dans une extrudeuse (1) à transport forcé que l'on peut chauffer et **en ce que** les produits réactionnels sont ensuite conduits par une colonne (3) à sel de métal alcalin.

2. Procédé suivant la revendication 1, **caractérisé en ce que** les matières de départ sont fondues et amenées à réagir dans une extrudeuse (1) à transport forcé que l'on peut chauffer, à une température comprise entre 50°C et 800°C.

3. Procédé suivant les revendications 1 et 2, **caractérisé en ce que** la réaction est effectuée sous pression réduite, pression normale ou surpression, en présence d'oxygène de l'air ou éventuellement sous une atmosphère de gaz de protection.

4. Procédé suivant la revendication 1, **caractérisé en ce que** la charge de sel est traitée à des nombres de tours compris entre 1 min⁻¹ et 75 min⁻¹ dans une extrudeuse, dont les pièces venant en contact avec les sels et/ou leurs masses fondues sont constituées en un alliage de Ni ou en métaux revêtus de PTFE/PFA, d'émail ou de matières céramiques et qui présente un canal à vis présentant un rapport 1/d entre 3 et 25.

5. Utilisation de sels de la formule générale (I) préparés selon la revendication 1, pour le revêtement galvanoplastique de matériaux à point de fusion élevé.
